# FASCICULE DE BREVET EUROPEEN

(11) **EP 2 876 326 B1**
(45) Date de publication et mention de la délivrance du brevet: **12.10.2016**
(21) Numéro de dépôt: 14193528.8
(22) Date de dépôt: 17.11.2014
(51) Int. Cl.: F16D 65/12, B64C 25/42, F16D 69/04

(54) **Procédé de rénovation et d'utilisation de disques de frein de type stator arrière à plots, disque assemblé et pile de disques correspondante**
Verfahren zur Erneuerung und Verwendung von Bremsscheiben vom Typ rückwärtiger Stator mit Bremsklötzen, montierte Scheibe und entsprechender Scheibenstapel.
Method for renovating and using rear-stator brake discs with pads, assembled disc and corresponding stack of discs

(30) Priorité: 21.11.2013 FR 1361459
(43) Date de publication de la demande: 27.05.2015
(73) Titulaire: Messier-Bugatti-Dowty, 78140 Vélizy-Villacoublay (FR)
(72) Inventeur: Chambard, Pierre, 78140 Vélizy-Villacoublay (FR); Dorge, Côme, 78140 Vélizy-Villacoublay (FR)
(74) Mandataire: Parzy, Benjamin Alain

(56) Documents cités:
- EP-A1- 0 840 029
- US-A- 4 982 818
- US-A- 5 099 960
- US-A1- 2008 196 982

## Description

L'invention concerne un procédé de rénovation et d'utilisation de disques de frein de type stator arrière à plots. L'invention concerne également un disque assemblé destiné à être utilisé en tant que disque stator arrière à plots d'une pile de disques de frein ainsi qu'une pile de disques de frein comportant un tel disque assemblé.

### ARRIERE PLAN TECHNOLOGIQUE DE L'INVENTION

Les systèmes de freinage de la plupart des aéronefs modernes comportent des freins à disques empilés autour d'un tube de torsion, et des actionneurs de freinage portés par une couronne et commandés pour appliquer un effort de freinage sur les disques en vue d'exercer sur les roues freinées de l'aéronef un couple de freinage tendant à ralentir celui-ci. Parmi les disques, on distingue les disques stators solidaires du tube de torsion, et les disques rotors, solidaires en rotation de la jante de la roue. Plus particulièrement, en ce qui concerne les disques stators, on distingue le disque stator avant qui est le disque stator sur lequel l'actionneur de freinage vient s'appuyer, le disque stator arrière qui vient reposer sur une partie du tube de torsion et les disques stators intermédiaires qui reposent entre deux disques rotors.

Les différents disques s'usent lors des freinages ce qui oblige à exécuter régulièrement des opérations de maintenance sur la pile de disques pour remplacer une partie ou tous les disques de la pile afin que le frein puisse toujours répondre aux contraintes de freinage qui lui sont imposées. Une fois la course d'usure de la pile de frein consommée, la pile de disques est retirée du frein et envoyée au service expertise - rénovation.

En ce qui concerne les disques stators arrières, il est connu d'utiliser un disque lors d'une première vie en tant que disque stator arrière d'une première pile de disques de frein, ledit disque ayant une épaisseur telle en début de première vie qu'il est appelé "disque épais" en début de première vie. Il est connu d'utiliser ledit disque lors d'une deuxième vie en tant que disque stator arrière dans une deuxième pile de disques de frein, ledit disque ayant une épaisseur telle en début de deuxième vie qu'il est appelé "disque mince" en début de deuxième vie.

Avec un tel procédé, un disque stator arrière peut être utilisé au cours de deux vies à la condition que le disque stator avant de la pile de disques considérée soit à chaque fois de taille adaptée. Ainsi, lorsque le disque stator arrière est "épais" le disque stator avant doit être "épais" c'est-à-dire avoir une épaisseur sensiblement identique à celle du disque stator arrière en début de deuxième vie, les disques rotors étant alors "minces" et les disques stators intermédiaires étant alors "épais". Lorsque le disque stator arrière est "mince" le disque stator avant doit être "mince" c'est-à-dire avoir une épaisseur sensiblement identique à celle du disque stator arrière en début de première vie, les disques rotors étant alors "épais" et les disques stators intermédiaires étant alors "minces".

L'utilisation et la rénovation d'un disque stator arrière implique donc d'avoir des disques stators avant de tailles adaptées. En particulier, il s'avère nécessaire d'avoir toujours deux types de disques stators avant de disponible (disque stator avant « épais » et disque stator avant « mince ») pour pouvoir s'adapter au disque stator arrière utilisé dans une pile de disques considérée.

Le procédé de rénovation et d'utilisation d'un disque stator arrière s'avère donc complexe à mettre en oeuvre.

Le document EP 0 840 029 Al montre un procédé d'assemblage de disques de frein en carbone.

### OBJET DE L'INVENTION

Un but de l'invention est de proposer un procédé simplifié de rénovation et d'utilisation de disques de frein de type stator arrière à plots.

### BREVE DESCRIPTION DE L'INVENTION

L'invention concerne un procédé de rénovation et d'utilisation de disques de frein d'aéronef de type stator arrière à plots, le procédé comportant les étapes de:
- utiliser un premier disque lors d'une première vie en tant que disque stator arrière à plots d'une première pile de disques de frein, le premier disque ayant une épaisseur initiale en début de première vie,
- utiliser un deuxième disque lors d'une première vie en tant que disque stator arrière à plots d'une deuxième pile de disques du frein, le deuxième disque en début de première vie étant sensiblement identique au premier disque en début de première vie,
- après la première vie du premier disque et la première vie du deuxième disque, usiner une face frottante de l'un des disques et une face arrière de l'autre des disques de sorte que l'une desdites faces comporte au moins un épaulement et l'autre desdites faces comporte au moins une encoche apte à coopérer avec ledit épaulement,
- emboîter le premier disque dans le deuxième disque de sorte que l'encoche et l'épaulement coopèrent pour centrer les disques,
- fixer les deux disques l'un à l'autre pour former un disque assemblé, le disque assemblé ayant une épaisseur sensiblement identique à l'épaisseur initiale,
- fixer des plots au disque assemblé,
- utiliser le disque assemblé lors d'une vie supplémentaire en tant que disque stator arrière à plots d'une troisième pile de disques du frein.

Ainsi, le disque assemblé a une même épaisseur que le premier disque en début de première vie ou que le deuxième disque en début de première vie. Il ne s'avère donc pas nécessaire d'ajuster les épaisseurs des autres disques d'une pile de frein considérée que l'on utilise le premier disque en début de première vie, le deuxième disque en début de première vie ou le disque assemblé (et par là le premier disque et le deuxième disque en début de deuxième vie). Par ailleurs il n'est nécessaire d'usiner qu'une seule des faces du premier disque et du deuxième disque, l'autre face demeurant identique à un surfaçage éventuel près. Le disque assemblé a ainsi une forme externe identique à celle du premier disque en début de première vie ou du deuxième disque en début de première vie de sorte qu'il n'est pas nécessaire d'ajuster les formes des autres disques d'une pile de frein considérée ou du tube de torsion associé que l'on utilise le premier disque en début de première vie, le deuxième disque en début de première vie ou le disque assemblé.

Ceci simplifie ainsi la rénovation et l'utilisation des disques stators arrière à plots.

En outre, le premier disque et le deuxième disque sont tous deux utilisés durant deux vies avant qu'il ne soit nécessaire de les remplacer par des disques neufs. La durée de vie du premier disque et du deuxième disque est ainsi optimisée.

Par ailleurs, l'épaisseur initiale du premier disque et du deuxième disque pourra être plus faible que celle d'un disque dit "épais" de l'art antérieur grâce au procédé de rénovation et d'utilisation de l'invention. Ceci permet d'avoir des disques neufs d'un coût plus faible.

Pour toute la présente demande, on entend par "vie", un cycle d'utilisation d'un disque dans une pile de disques lorsque la pile de disques est montée sur un aéronef et subit des freinages successifs, la vie commençant lorsque la pile de disques est montée sur l'aéronef et s'arrêtant lorsque la pile de disques est démontée de l'aéronef et envoyée en atelier pour inspection et maintenance.

De même, par "disque", on entend l'élément de friction généralement annulaire, qui présente l'épaisseur initiale en début de première vie et qui subit une usure au niveau de sa face frottante ou de ses faces frottantes lors de chacune des vies suivantes, usure provoquant une diminution de son épaisseur.

Par "disque stator arrière" on entend le disque stator qui vient reposer sur une partie du tube de torsion. Par "disque stator avant" on entend le disque stator sur lequel l'actionneur de freinage vient s'appuyer.

Par "face frottante" on entend la face principale du disque stator arrière (ou avant) qui est en appui contre une face principale de l'un des disques rotor d'une pile de disques considérée. Par "face arrière" on entend la face principale du disque stator arrière (ou avant) qui est opposée à la face principale dite "face frottante" et qui est donc en appui sur le tube de torsion (ou sur l'actionneur de freinage).

Pour la présente demande, par "épaisseur sensiblement égale", on entend que l'épaisseur a une valeur proche de celle spécifiée, typiquement dans une plage de 5% de l'épaisseur spécifiée.

L'invention concerne également un disque assemblé destiné à être utilisé en tant que disque stator arrière à plots d'une pile de disques de frein, ledit disque comportant :
- un premier disque ayant été utilisé au cours d'une première vie en tant que disque stator arrière à plots d'une première pile de disques de frein, le premier disque comportant une première face principale comprenant au moins un épaulement,
- un deuxième disque ayant été utilisé au cours d'une première vie en tant que disque stator arrière à plots d'une deuxième pile de disques de frein, le deuxième disque comportant une deuxième face principale qui en appui sur la première face principale du premier disque et qui comporte au moins une encoche dans laquelle est reçue l'épaulement du premier disque, l'encoche et l'épaulement coopérant pour centrer les disques,
- des moyens de fixation des deux disques entre eux.

L'invention concerne également une pile de disques comportant le disque assemblé de l'invention en tant que disque stator arrière à plots.

### BREVE DESCRIPTION DES DESSINS

L'invention sera mieux comprise à la lumière de la description qui suit en référence aux figures des dessins annexés parmi lesquelles :
- la figure 1 est une vue en coupe d'un frein électromécanique ;
- les figures 2a, 2b sont des schémas représentant un disque stator arrière à plots de la pile de disques du frein illustré à la figure 1 respectivement au début et à la fin de sa première vie,
- les figures 3a, 3b sont des schémas représentant le disque illustré aux figures 2a et 2b respectivement à la fin de sa première vie et au début de sa deuxième vie,
- les figures 4a, 4b sont des schémas représentant un autre disque stator arrière à plots d'une deuxième pile de disques respectivement au début et à la fin de sa première vie,
- les figures 5a, 5b sont des schémas représentant le disque illustré aux figures 4a et 4b respectivement à la fin de sa première vie et au début de sa deuxième vie,
- les figures 6a, 6b et 6c sont des schémas représentant respectivement le disque en début de deuxième vie illustré à la figure 3b, le disque en début de deuxième vie illustré à la figure 5b et un disque assemblé formé par l'association du disque illustré à la figure 6a et du disque illustré à la figure 6b,
- les figures 7a, 7b sont des schémas représentant le disque assemblé illustré à la figure 6c respectivement au début et à la fin de sa vie supplémentaire.

### DESCRIPTION DETAILLEE DE L'INVENTION

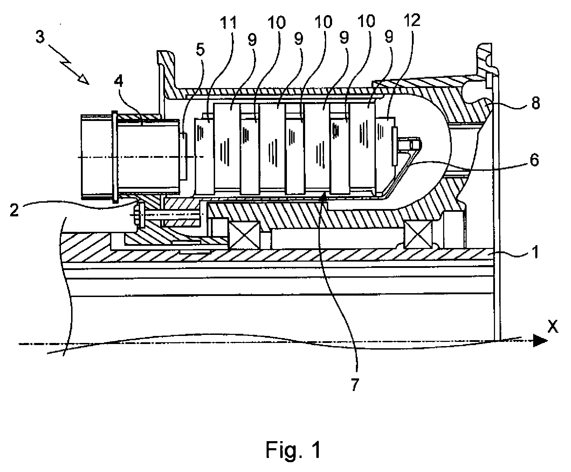

La figure 1 représente un frein qui est destiné à freiner une roue d'aéronef montée sur un essieu 1 d'axe X.

Le frein comporte une couronne 2 montée sur l'essieu 1 et arrêtée en rotation par rapport à celui-ci par des moyens non représentés. La couronne 2 porte des actionneurs de freinage 3 (dont un seul est représenté à la figure 1) qui comportent chacun un boîtier 4 dans lequel un poussoir 5 est monté pour coulisser selon une direction axiale parallèle à l'axe X et exercer sélectivement un effort de freinage sur une première pile de disques 7 comportant alternativement des disques rotors 9 solidaires en rotation d'une jante 8 de la roue et des disques stators 10, 11, 12 immobilisés en rotation par un tube de torsion 6 solidaire de la couronne 2.

Les disques rotors 9 et les disques stators 10, 11, 12 peuvent être en tout matériau adapté au freinage comme par exemple en carbone. De préférence, les disques rotors et les disques stators sont d'un même matériau de sorte que les différentes faces frottantes des disques s'usent de façon sensiblement identique.

Le poussoir 5 peut par exemple être actionné par un moteur électrique de l'actionneur associé, le moteur étant agencé pour faire tourner l'un des éléments d'un système vis-écrou, par exemple du type à billes ou à rouleaux, le poussoir 5 étant solidaire de l'autre des éléments du système. Un organe d'anti-rotation empêche alors le poussoir 5 de tourner.

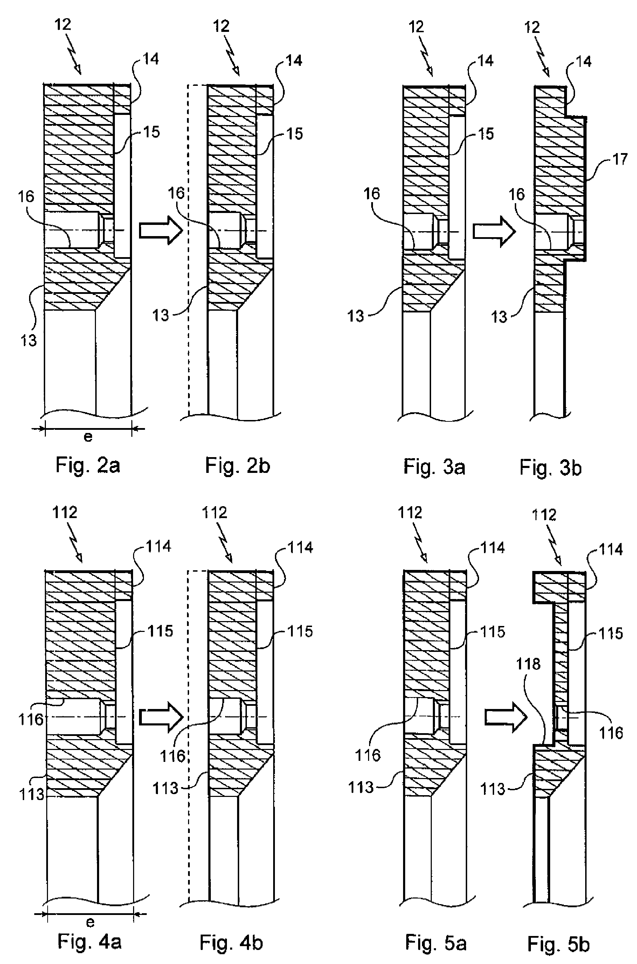

Comme plus visible à la figure 2a, la première pile de disques comporte en particulier un disque stator arrière à plots 12 appelé par la suite « premier disque ». Le premier disque 12 présente une face principale 13 dite face frottante qui est en regard de l'un des disques rotors 9 de la première pile de disques 7. Le premier disque 12 comporte en outre une face principale 14 dite face arrière qui est opposée à la face frottante 13 et qui est en regard du tube de torsion 6.

La face arrière 14 comporte une pluralité de logements 15 (dont un seul est illustré ici) dans lesquels sont agencés des plots (non illustré à la figure 2a). Le premier disque 12 comporte ainsi des perçages 16 (dont un seul est illustré ici) le traversant de sa face frottante 13 à sa face arrière 14, chaque perçage 16 débouchant dans l'un des logements 15 de la face arrière 14. Un rivet (non illustré à la figure 2a) s'étendant dans chaque perçage 16 permet de solidariser chaque plot au premier disque 12.

L'application d'un effort de freinage force les disques de la première pile de disques 7 à frotter les uns contre les autres de sorte qu'une partie de l'énergie cinétique de l'aéronef est dissipée en chaleur. Cependant, le frottement des disques entraîne inévitablement l'usure des différentes faces frottantes des disques rotors et disques stators.

La figure 2a représente ainsi le premier disque 12 en début de première vie, ledit premier disque 12 présentant alors une épaisseur initiale e. Le premier disque 12 est alors un disque monobloc. Le premier disque 12 est ainsi utilisé tel quel au cours de la première vie dans la première pile de disques 7.

Au cours de ladite première vie, le premier disque 12 s'use au niveau de sa face frottante 13. Ceci va entraîner une diminution de l'épaisseur initiale e.

Ainsi, en référence à la figure 2b, à la fin de la première vie, le premier disque 12 a une épaisseur inférieure à l'épaisseur initiale e. La diminution de l'épaisseur du disque 12 au cours de la première vie est illustrée en pointillés.

En référence aux figures 3a et 3b, à l'issue de la première vie, les plots et les rivets sont alors séparés du premier disque 12. Puis la face frottante 13 du premier disque 12 est ici surfacée pour améliorer l'état de surface de ladite face 13.

Selon l'invention, la face arrière 14 du premier disque 12 est usinée de sorte que la face arrière 14 comporte à la fin de l'usinage une pluralité d'épaulements 17 comme décrit ci-après.

Ainsi, à la fin de l'usinage et donc en début de deuxième vie, le premier disque 12 ne présente plus de logements 15 mais seulement des épaulements 17. Le premier disque 12 a dès lors une face frottante 13 sensiblement identique à sa face frottante en début de première vie mais une face arrière 14 très différente de sa face arrière en début de première vie. Les perçages 16 s'étendent toujours de la face frottante 13 à la face arrière 14 à travers l'épaisseur du premier disque 12.

Selon l'invention, en référence aux figures 4a et 4b, un deuxième disque 112 est utilisé au cours d'une première vie en tant que disque stator arrière à plots d'une deuxième et nouvelle pile de disques de frein (non illustrée ici). Bien entendu, ladite nouvelle pile de disques peut être montée au même emplacement que la première pile de disques 7.

Le deuxième disque 112 en début de première vie est identique au premier disque 12 en début de première vie. Le deuxième disque 112 présente ainsi une face principale 113 dite face frottante qui est en regard de l'un des disques rotors de la deuxième pile de disques. Le deuxième disque 112 comporte en outre une face principale 114 dite face arrière qui est opposée à la face frottante 113 et qui est en regard du tube de torsion.

Comme pour le premier disque 12, la face arrière 114 du deuxième disque 112 comporte une pluralité de logements 115 dans lesquels sont agencés des plots. Le deuxième disque 112 comporte ainsi des perçages 116 le traversant de sa face frottante 113 à sa face arrière 114, chaque perçage 116 débouchant dans l'un des logements 115 de la face arrière 114. Un rivet s'étendant dans chaque perçage 116 permet de solidariser chaque plot au deuxième disque 112. Les dimensions des logements et des perçages et du disque en lui-même sont identiques entre le premier disque 12 et le deuxième disque 112 de même que le nombre de perçages et de logements.

La figure 4a représente ainsi le deuxième disque 112 en début de première vie, ledit deuxième disque 112 présentant donc une épaisseur initiale e. Le deuxième disque 112 est alors un disque monobloc. Le deuxième disque 112 est ainsi utilisé tel quel au cours de la première vie dans la deuxième pile de disques.

Au cours de ladite première vie, le deuxième disque 112 s'use au niveau de sa face frottante 113. Ceci va entraîner une diminution de l'épaisseur initiale e.

Ainsi, en référence à la figure 4b, à la fin de la première vie, le deuxième disque 112 a une épaisseur qui est inférieure à l'épaisseur initiale e et qui est sensiblement égale à l'épaisseur du premier disque 12 à l'issue de sa première vie. La diminution de l'épaisseur du deuxième disque 112 au cours de la première vie est illustrée en pointillés.

En référence aux figures 5a et 5b, à l'issue de la première vie du deuxième disque 112, les plots et les rivets sont séparés du deuxième disque 112. Puis la face arrière 114 du deuxième disque est ici surfacée pour améliorer l'état de surface de ladite face.

Selon l'invention, la face frottante 113 du deuxième disque 112 est usinée de sorte que la face frottante 113 comporte à la fin de l'usinage une pluralité d'encoches 118 comme décrit ci-après, chaque encoche 118 étant apte à recevoir un épaulement 17 respectif du premier disque 12.

Ainsi, à la fin de l'usinage et donc en début de deuxième vie, le deuxième disque 112 ne présente plus de face frottante lisse mais une face frottante 113 comprenant des encoches 118. Le deuxième disque 112 a dès lors une face arrière 114 sensiblement identique à sa face arrière en début de première vie mais une face frottante 113 très différente de sa face frottante en début de première vie. Les perçages 116 s'étendent toujours de la face frottante 113 à la face arrière 114 à travers l'épaisseur du deuxième disque 112.

En référence aux figures 3b, 5b et 6a à 6c, une fois le premier disque 12 usiné et le deuxième disque 112 usiné, le premier disque 12 et le deuxième disque 112 sont emboîtés de sorte que les encoches 118 et les épaulements 17 coopèrent pour centrer les deux disques.

Le premier disque 12 et le deuxième disque 112 sont usinés de sorte qu'une fois les deux disques emboîtés, l'ensemble formé par le premier disque 12 et le deuxième disque 112 ait une épaisseur identique à l'épaisseur initiale e.

De préférence, les deux disques 12, 112 sont usinés de sorte que, une fois les deux disques emboîtés, chaque perçage 16 du premier disque 12 soit coaxial à l'un des perçages 116 du deuxième disque 112.

Selon un mode de réalisation particulier, le premier disque 12 est usiné de sorte que le nombre d'épaulements 17 soit identique au nombre de logements 115 du deuxième disque 112 et le deuxième disque 112 est usiné de sorte que le nombre d'encoches 118 soit identique au nombre de logements 115 du deuxième disque 112. De la sorte, le premier disque 12 et le deuxième disque 112 comportent un nombre identique de respectivement épaulements et encoches.

De façon particulière, le premier disque 12 est usiné de sorte que le diamètre des épaulements 17 soit identique à celui des logements 115 du deuxième disque (le deuxième disque 112 étant donc usiné de sorte que le diamètre des encoches 118 soit identique à celui des logements 115).

Le premier disque 12 est ici usiné de sorte que chaque épaulement 17 soit coaxial avec respectivement l'un des logements 115 (le deuxième disque 112 étant donc usiné de sorte que chaque encoche 118 soit coaxiale avec respectivement l'un des logements 115). De la sorte, les différents perçages traversent tous un épaulement 17 respectif de la face arrière 14 (pour le premier disque 12) ou débouchent tous au niveau d'une encoche 118 respective de la face frottante 113 (pour le deuxième disque 112).

Une fois le premier disque 12 et le deuxième disque 112 emboîtés, des plots sont insérés dans les logements de la face arrière 114 du deuxième disque 112.

Puis des rivets sont insérés successivement dans les perçages 16 du premier disque 12 puis dans les perçages 116 du deuxième disque 112 puis à travers les plots. Les rivets permettent ainsi de solidariser le premier disque 12, le deuxième disque 112 et les plots.

Ainsi fixés l'un à l'autre, le premier disque 12 et le deuxième disque 112 forment un disque assemblé 212. La face frottante 213 du disque assemblé 212, soit la face destinée à être en contact avec un disque rotor, est ainsi la face frottante 13 du premier disque 12 et la face arrière 214 du disque assemblé 212, soit la face destinée à être en contact avec le tube de torsion, est ainsi la face arrière 114 du deuxième disque 112.

Le disque assemblé 212 a de façon avantageuse une forme externe identique à celle du premier disque 12 en début de première vie et du deuxième disque 112 en début de première vie. En effet, la face frottante 13 du premier disque 12 a été seulement surfacée et la face arrière 114 du deuxième disque 112 a été seulement surfacée, la face arrière 14 usinée du premier disque 12 et la face frottante 113 usinée du deuxième disque 112 reposant l'une contre l'autre.

On notera que l'usinage adapté du premier disque 12 et du deuxième disque 112 permet de réutiliser de façon avantageuse les perçages déjà formés dans le premier disque 12 et le deuxième disque 112 pour positionner les rivets. Il n'est donc pas nécessaire de percer de nouveau le premier disque 12 et le deuxième disque 112 au cours de leurs rénovations.

De même l'usinage adapté du premier disque 12 et du deuxième 112 permet de réutiliser de façon avantageuse les logements 115 du deuxième disque 112 pour positionner les plots. Il n'est donc pas nécessaire de créer de nouveaux logements pour plots au cours de la rénovation du premier disque 12 et du deuxième disque 112.

La rénovation du premier disque 12 et du deuxième disque 112 s'avère donc simple.

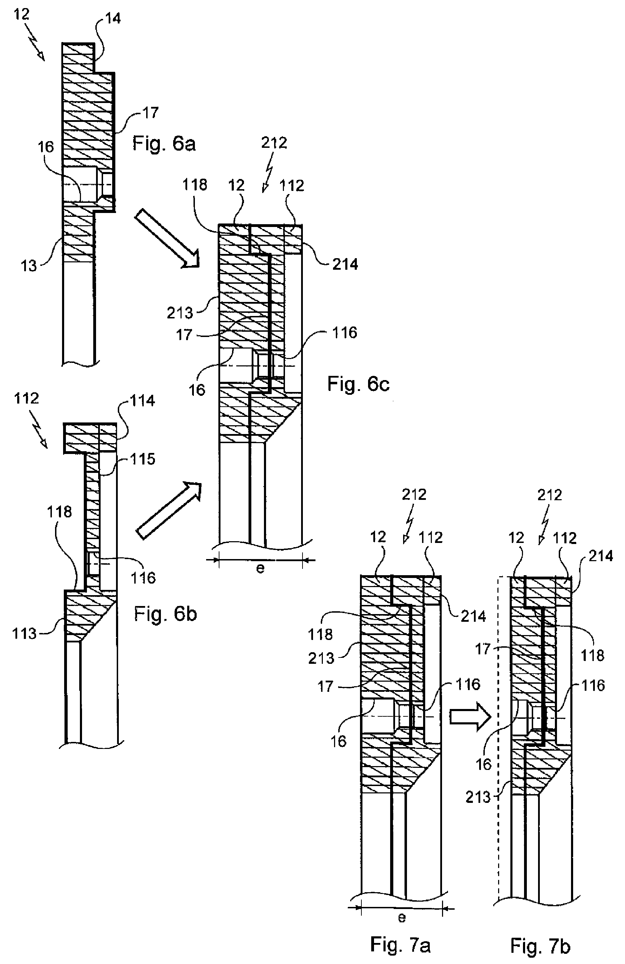

En référence à la figure 7a, le disque assemblé 212 est utilisé en tant que disque stator arrière à plot dans une troisième et nouvelle pile de disques. Le premier disque 12 et le deuxième disque 112 sont ainsi utilisés dans la troisième pile de disques au cours d'une deuxième vie. Bien entendu, ladite nouvelle pile de disques peut être montée au même emplacement que la première pile de disques 7.

Au cours de la vie supplémentaire, le disque assemblé 212 s'use au niveau de sa face frottante 213 c'est-à-dire au niveau de la face frottante 13 du premier disque 12. Ceci entraîne une diminution de l'épaisseur du disque assemblé 212 et donc du premier disque 12.

En référence à la figure 7b, en fin de vie supplémentaire, le disque assemblé 212 est rebuté c'est-à-dire que le premier disque 12 et le deuxième disque 112 sont finalement rebutés à la fin de leur deuxième vie. La diminution de l'épaisseur du disque assemblé 212 au cours de la vie supplémentaire est illustrée en pointillés.

Bien entendu l'invention n'est pas limitée à la mise en oeuvre décrite et on peut y apporter des variantes sans sortir du cadre de l'invention tel que défini par les revendications.

Le procédé est également applicable à des disques d'autres freins qu'un frein électromécanique comme par exemple un frein hydraulique.

Les épaulements pourront être portés par le deuxième disque et les encoches par le premier disque. Un même disque pourra à la fois comporter des encoches et des épaulements et l'autre disque des épaulements et des encoches correspondantes. Le nombre d'encoches et la forme des encoches pourront être différents de ce qui a été décrit à condition que les encoches soient conformées et en nombre tel qu'elles permettent de réduire au maximum les coûts d'usinage du premier disque et/ou du deuxième disque tout en garantissant la reprise des couples entre le premier disque et le deuxième disque emboîtés l'un à l'autre. Le même raisonnement s'applique évidemment aux épaulements. Ainsi, le nombre d'encoches et d'épaulements pourra être différent du nombre de logements.

Bien qu'ici, en fin de première vie, les faces des disques soient soit usinées soit surfacées on pourra envisager qu'il n'y ait pas de surfaçage. Par exemple, la face arrière du deuxième disque pourra ne pas être surfacée.

Bien qu'ici en fin de vie supplémentaire le disque assemblé soit rebuté, on pourra envisager que ledit disque ne soit pas rebuté. Par exemple, le deuxième disque pourra ne pas être rebuté à la fin de sa deuxième vie (soit à la fin de la vie supplémentaire du disque assemblé) et être utilisé au cours d'une troisième vie.

Le premier disque et le deuxième disque pourront être fixés ensemble à l'aide d'autres moyens de fixation que ceux utilisés pour fixer les plots au disque assemblé.

## Revendications

1. Procédé de rénovation et d'utilisation de disques de frein d'aéronef de type stator arrière à plots, le procédé comportant les étapes de:
- utiliser un premier disque (12) lors d'une première vie en tant que disque stator arrière à plots d'une première pile de disques de frein, le premier disque ayant une épaisseur initiale en début de première vie,
- utiliser un deuxième disque (112) lors d'une première vie en tant que disque stator arrière à plots d'une deuxième pile de disques du frein, le deuxième disque en début de première vie étant sensiblement identique au premier disque en début de première vie,
- après la première vie du premier disque et la première vie du deuxième disque, usiner une face frottante (13) de l'un des disques et une face arrière (114) de l'autre des disques de sorte que l'une desdites faces comporte au moins un épaulement (17) et l'autre desdites faces comporte au moins une encoche (118) apte à coopérer avec ledit épaulement,
- emboîter le premier disque dans le deuxième disque de sorte que l'encoche et l'épaulement coopèrent pour centrer les disques,
- fixer les deux disques l'un à l'autre pour former un disque assemblé (212), le disque assemblé ayant une épaisseur sensiblement identique à l'épaisseur initiale,
- fixer des plots au disque assemblé,
- utiliser le disque assemblé lors d'une vie supplémentaire en tant que disque stator arrière à plots d'une troisième pile de disques du frein.

2. Procédé selon la revendication 1, dans lequel le premier disque (12) et le deuxième disque (112) sont usinés de sorte que la face frottante (113) porte l'encoche (118) et la face arrière (14) porte l'épaulement (17).

3. Procédé selon la revendication 1, dans lequel des plots sont fixés au premier disque (12) en début de première vie par des premiers rivets traversant des perçages (16) du premier disque et dans lequel des plots sont fixés au deuxième disque (112) en début de première vie par des deuxièmes rivets traversant des perçages (116) du deuxième disque, le premier disque et le deuxième disque étant usinés de sorte que chaque perçage du premier disque soit coaxial avec respectivement l'un des perçages du deuxième disque lorsque les deux disques sont assemblés, les plots étant alors fixés au disque assemblé par des troisièmes rivets traversant successivement les perçages du premier disque, les perçages du deuxième disque et les plots, les troisièmes rivets fixant ainsi également le premier disque au deuxième disque.

4. Procédé selon la revendication 3, dans lequel le premier disque (12) et le deuxième disque (112) sont usinés de sorte que l'épaulement (17) soit traversé par l'un des perçages de l'un des disques et l'un des perçages de l'autre des disques débouche dans l'encoche (118) correspondante.

5. Procédé selon la revendication 1, dans lequel le disque dont la face frottante (113) est usinée comporte à l'opposée une face arrière (114) qui comprend des logements (115) pour recevoir des plots, le premier disque (12) et le deuxième disque (112) étant usinés de sorte que l'encoche soit coaxiale et de diamètre identique à l'un desdits logements et de sorte que l'épaulement soit coaxial et de diamètre identique à l'encoche correspondante.

6. Procédé selon la revendication 1, dans lequel le disque dont la face frottante (113) est usinée comporte à l'opposée une face arrière (114) qui comprend des logements (115) pour recevoir des plots, le premier disque (12) et le deuxième disque (112) étant usinés de sorte à comporter autant d'encoches (118) et d'épaulements correspondants (17) que de logements.

7. Disque assemblé (212) destiné à être utilisé en tant que disque stator arrière à plots d'une pile de disques de frein, ledit disque comportant :
- un premier disque (12) ayant été utilisé au cours d'une première vie en tant que disque stator arrière à plots d'une première pile de disques de frein, le premier disque comportant une première face principale comprenant au moins un épaulement (17),
- un deuxième disque (112) ayant été utilisé au cours d'une première vie en tant que disque stator arrière à plots d'une deuxième pile de disques de frein, le deuxième disque comportant une deuxième face principale qui en appui sur la première face principale du premier disque et qui comporte au moins une encoche (118) dans laquelle est reçue l'épaulement du premier disque, l'encoche et l'épaulement coopérant pour centrer les disques,
- des moyens de fixation des deux disques entre eux.

8. Pile de disques de frein comportant comme disque stator arrière un disque assemblé selon la revendication 7.

## Patentansprüche

1. Verfahren zur Erneuerung und Verwendung von Luftfahrzeug-Bremsscheiben nach Art eines hinteren Stators mit Bremsklötzen, wobei das Verfahren die Schritte umfasst:
- Verwenden einer ersten Scheibe (12) während einer ersten Lebensdauer als hintere Statorscheibe mit Bremsklötzen eines ersten Bremsscheibenstapels, wobei die erste Scheibe eine Anfangsdicke zu Beginn der ersten Lebensdauer hat,
- Verwenden einer zweiten Scheibe (112) während einer ersten Lebensdauer als hintere Statorscheibe mit Bremsklötzen eines zweiten Bremsscheibenstapels, wobei die zweite Scheibe zu Beginn der ersten Lebensdauer im Wesentlichen identisch zur ersten Scheibe zu Beginn der ersten Lebensdauer ist,
- nach der ersten Lebensdauer der ersten Scheibe und der ersten Lebensdauer der zweiten Scheibe Bearbeiten einer Reibfläche (13) einer der Scheiben und einer Rückfläche (114) der anderen der Scheiben, sodass eine der Flächen mindestens eine Schulter (17) und die andere der Flächen mindestens eine Einkerbung (118) umfasst, die dazu geeignet ist, mit der Schulter zusammenzuwirken,
- Einfügen der ersten Scheibe in die zweite Scheibe, sodass die Einkerbung und die Schulter zusammenwirken, um die Scheiben zu zentrieren,
- Befestigen der beiden Scheiben aneinander, um eine zusammengesetzte Scheibe (212) zu bilden, wobei die zusammengesetzte Scheibe eine Dicke hat, die im Wesentlichen identisch zur Anfangsdicke ist,
- Befestigen der Bremsklötze an der zusammengesetzten Scheibe,
- Verwenden der zusammengesetzten Scheibe während einer zusätzlichen Lebensdauer als hintere Statorscheibe mit Bremsklötzen eines dritten Bremsscheibenstapels.

2. Verfahren nach Anspruch 1, wobei die erste Scheibe (12) und die zweite Scheibe (112) derart bearbeitet werden, dass die Reibfläche (113) die Einkerbung (118) trägt und die Rückfläche (14) die Schulter (17) trägt.

3. Verfahren nach Anspruch 1, wobei die Bremsklötze an der ersten Scheibe (12) zu Beginn der ersten Lebensdauer mittels erster Nieten befestigt werden, die Bohrungen (16) der ersten Scheibe durchsetzen, und wobei die Bremsklötze an der zweiten Scheibe (112) zu Beginn der ersten Lebensdauer mittels zweiter Nieten befestigt werden, die Bohrungen (116) der zweiten Scheibe durchsetzen, wobei die erste Scheibe und die zweite Scheibe derart bearbeitet werden, dass jede Bohrung der ersten Scheibe koaxial mit jeweils einer der Bohrungen der zweiten Scheibe ist, wenn die beiden Scheiben zusammengesetzt sind, wobei die Bremsklötze dann an der zusammengesetzten Scheibe mittels dritter Nieten befestigt werden, die nacheinander die Bohrungen der ersten Scheibe, die Bohrungen der zweiten Scheibe und die Bremsklötze durchsetzen, wobei die dritten Nieten somit auch die erste Scheibe an der zweiten Scheibe befestigen.

4. Verfahren nach Anspruch 3, wobei die erste Scheibe (12) und die zweite Scheibe (112) derart bearbeitet werden, dass die Schulter (17) von einer der Bohrungen von einer der Scheiben durchsetzt wird und eine der Bohrungen der anderen der Scheiben in die entsprechende Einkerbung (118) mündet.

5. Verfahren nach Anspruch 1, wobei die Scheibe, deren Reibfläche (113) bearbeitet wird, auf der abgewandten Seite eine Rückfläche (114) umfasst, welche Aufnahmen (115) enthält, um Bremsklötze aufzunehmen, wobei die erste Scheibe (12) und die zweite Scheibe (112) derart bearbeitet werden, dass die Einkerbung zu einer der Aufnahmen koaxial ist und einen zu dieser identischen Durchmesser hat, und derart, dass die Schulter zur entsprechenden Einkerbung koaxial ist und einen zu dieser identischen Durchmesser hat.

6. Verfahren nach Anspruch 1, wobei die Scheibe, deren Reibfläche (113) bearbeitet wird, auf der abgewandten Seite eine Rückfläche (114) umfasst, die Aufnahmen (115) enthält, um Bremsklötze aufzunehmen, wobei die erste Scheibe (12) und die zweite Scheibe (112) derart bearbeitet werden, dass sie ebenso viele Einkerbungen (118) und entsprechende Schultern (17) wie Aufnahmen umfassen.

7. Zusammengesetzte Scheibe (212), die dazu bestimmt ist, als hintere Statorscheibe mit Bremsklötzen eines Bremsscheibenstapels verwendet zu werden, wobei die Scheibe umfasst:
- eine erste Scheibe (12), die während einer ersten Lebensdauer als hintere Statorscheibe mit Bremsklötzen eines ersten Bremsscheibenstapels verwendet wurde, wobei die erste Scheibe eine erste Hauptfläche hat, die mindestens eine Schulter (17) umfasst,
- eine zweite Scheibe (112), die während einer ersten Lebensdauer als hintere Statorscheibe mit Bremsklötzen eines zweiten Bremsscheibenstapels verwendet wurde, wobei die zweite Scheibe eine zweite Hauptfläche umfasst, die an der ersten Hauptfläche der ersten Scheibe anliegt und die mindestens eine Einkerbung (118) umfasst, in der die Schulter der ersten Scheibe ausgenommen ist, wobei die Einkerbung und die Schulter zusammenwirken, um die Scheiben zu zentrieren,
- Befestigungsmittel zum Befestigen der beiden Scheiben aneinander.

8. Bremsscheibenstapel, umfassend als hintere Statorscheibe eine zusammengesetzte Scheibe nach Anspruch 7.

## Claims

1. Method for the reconditioning and use of aircraft brake discs of the rear stator type with studs, the method comprising the steps of:
- using a first disc (12) during a first life as the rear stator disc with studs from a first stack of brake discs, the first disc having an initial thickness at the start of the first life,
- using a second disc (112) during a first life as the rear stator disc with studs from a second stack of brake discs, the second disc at the start of the first life being substantially identical to the first disc at the start of the first life,
- after the first life of the first disc and the first life of the second disc, machining a friction surface (13) on one of the discs and a rear surface (114) on the other of the discs so that one of said surfaces comprises at least one shoulder (17) and the other of said surfaces comprises at least one notch (118) capable of cooperating with said shoulder,
- nesting the first disc in the second disc such that the notch and the shoulder cooperate so as to centre the discs,
- fixing the two discs to one another to form an assembled disc (212), the assembled disc having a thickness which is substantially identical to the initial thickness,
- fixing studs to the assembled disc,
- using the assembled disc during an additional life as the rear stator disc with studs from a third stack of brake discs.

2. Method according to Claim 1, in which the first disc (12) and the second disc (112) are machined so that the friction surface (113) carries the notch (118) and the rear surface (14) carries the shoulder (17).

3. Method according to Claim 1, in which the studs are fixed to the first disc (12) at the start of the first life by first rivets passing through drilled holes (16) of the first disc and in which studs are fixed to the second disc (112) at the start of the first life by second rivets passing through the drilled holes (116) of the second disc, the first disc and the second disc being machined so that each drilled hole of the first disc is respectively coaxial with one of the drilled holes of the second disc when the two discs are assembled, the studs thus being fixed to the assembled disc by third rivets successively passing through the drilled holes of the first disc, the drilled holes of the second disc and the studs, the third rivets thus also fixing the first disc to the second disc.

4. Method according to Claim 3, in which the first disc (12) and the second disc (112) are machined so that the shoulder (17) is traversed by one of the drilled holes of one of the discs and one of the drilled holes of the other of the discs opens into the corresponding notch (118).

5. Method according to Claim 1, in which the disc, the friction surface (113) thereof being machined, comprises a rear surface (114) opposite said friction surface, said rear surface comprising housings (115) to receive studs, the first disc (12) and the second disc (112) being machined such that the notch is coaxial and of identical diameter to one of said housings and such that the shoulder is coaxial and of identical diameter to the corresponding notch.

6. Method according to Claim 1, in which the disc, the friction surface (113) thereof being machined, comprises a rear surface (114) opposite said friction surface, said rear surface comprising housings (115) to receive studs, the first disc (12) and the second disc (112) being machined so as to comprise as many corresponding notches (118) and shoulders (17) as housings.

7. Assembled disc (212) designed to be used as a rear stator disc with studs from a stack of brake discs, said disc comprising:
- a first disc (12) having been used during a first life as a rear stator disc with studs from a first stack of brake discs, the first disc comprising a first principal surface comprising at least one shoulder (17),
- a second disc (112) having been used during a first life as a rear stator disc with studs from a second stack of brake discs, the second disc comprising a second principal surface which bears against the first principal surface of the first disc and which comprises at least one notch (118) in which the shoulder of the first disc is received, the notch and the shoulder cooperating so as to centre the discs,
- means for fixing the two discs together.

8. Stack of brake discs comprising an assembled disc according to Claim 7 as the rear stator disc.
